Europäisches Patentamt

European Patent Office

Office européen des brevets

(19)

(11) Veröffentlichungsnummer: **0 002 692**
**A1**

(12) # EUROPÄISCHE PATENTANMELDUNG

(21) Anmeldenummer: **78101579.7**

(22) Anmeldetag: **06.12.78**

(51) Int. Cl.²: **B 32 B 15/08,** B 65 D 65/40

(30) Priorität: **22.12.77 DE 2757370**

(43) Veröffentlichungstag der Anmeldung: **11.07.79**
**Patentblatt 79/14**

(84) Benannte Vertragsstaaten: **DE FR GB IT**

(71) Anmelder: **Bayer Aktiengesellschaft, Zentralbereich Patente,Marken und Lizenzen Bayerwerk, D-5090 Leverkusen 1 (DE)**

(72) Erfinder: **Bottenbruch, Ludwig, Dr., Wöhlerstrasse 5, D-4150 Krefeld (DE)**
Erfinder: **Vernaleken, Hugo, Dr., Kreuzbergstrasse 147, D-4150 Krefeld (DE)**

(54) **Herstellung und Verwendung von gasdichten Kunststoff-Aluminium-Verbundfolien.**

(57) Gasdichte Kunststoff-Aluminium-Verbundfolien, dadurch gekennzeichnet, daß zu ihrer Herstellung Aluminiumfolien verwendet werden mit einer Reißdehnung von mehr als 30% bei einer Dehngeschwindigkeit von mehr als 10¹%/sec, und die Verwendung dieser Verbundfolien zur Herstellung von Formteilen nach dem Tiefziehverfahren.

BEZEICHNUNG GEÄNDERT
siehe Titelseite

BAYER AKTIENGESELLSCHAFT          5090 Leverkusen, Bayerwerk
Zentralbereich                    G/Rz
Patente, Marken und Lizenzen

## Gasdichte Kunststoff-Aluminium-Verbundfolien

Das gasdichte Verpacken von Gütern, insbesondere die dauerhafte Lebensmittelverpackung, gewinnt eine zunehmende Bedeutung.  Von den vielen angebotenen Verpackungsmitteln, wie Blech, Glas, Kunststoffe mit Gassperreigenschaft (z.B. Acrylnitril-haltige Copolymerisate), Laminate aus tragenden Kunststoffschichten und Gassperrschichten (u.a. auch Metallfolien) ist keines vollkommen befriedigend.  Die Gassperreigenschaften der Kunststoffe sind unvollkommen, andere verwendete Materialien sind zu schwer, erfordern zu viel Material, oder sind umständlich zu verarbeiten und anzuwenden.

Zur Herstellung von Verpackungseinheiten, insbesondere für Lebensmittel, ist die Tiefziehtechnik besonders günstig, weil aus vorgefertigten, gegebenenfalls mehrschichtigen Folienbahnen produktgerechte Verpackungsformen rationell hergestellt werden können.  Man braucht jedoch ein tiefziehfähiges, gasdichtes Folienmaterial geeigneter Stärke.

Le A 18 608 - Europa

- 2 -

Metallfolien sind die besten Gassperren, aber für das Tiefziehen ungünstig, weil sie - besonders bei hohen Ziehgeschwindigkeiten - von der Kunststoff-Folie abreißen oder aber - dies gilt insbesondere für Aluminiumfolien - selbst zerreißen.

Durch Tiefziehen von Kunststoff-Folien hergestellte Verpackungsteile nachträglich zu metallisieren, z.B. durch Bedampfen, ist technisch und wirtschaftlich unvertretbar.

Der Erfindung liegt die Erkenntnis zugrunde, daß Verbundfolien aus mindestens einer Aluminiumschicht und mindestens einer Kunststoffschicht vollständig gasdicht und zum Tiefziehen geeignet sind, wenn die Aluminiumschicht eine Aluminiumfolie mit einer Reißdehnung von $> 30$ % bei einer Dehnungsgeschwindigkeit von $> 10^1$ %/sec. (DIN 53 455) ist.

Gegenstand der Erfindung sind somit tiefziehfähige, gasdichte Kunststoff-Aluminium-Verbundfolien, die dadurch gekennzeichnet sind, daß zu ihrer Herstellung Aluminiumfolien verwendet werden mit einer Reißdehnung nach DIN 53 455 von $> 30$ % bei einer Dehnungsgeschwindigkeit $> 10^1$ %/sec.

Geeignete Kunststoffe, die zur Verbundfolien-Herstellung verwendet werden können, sind tiefziehfähige thermoplastische Materialien wie Polyolefine, so z.B. Polyäthylen und dessen Copolymerisate mit bevorzugt Propylen und Vinylacetat, Polypropylen, gegebenenfalls mit weiteren Comonomeren modifiziert, Polyisobutylen, Polyvinylchlorid, Polyvinylidenchlorid, Polyvinylfluorid, Polytrichlorfluoräthylen, Polytetrafluoräthylen, ggf. modifiziert mit Äthylen und/oder Vinylacetat als Comonomer, Polyvinylacetat bzw. dessen partielle Verseifungsprodukte, Polyvinylalkohol,

Le A 18 608

Polyvinylformal, Polyvinylbutyral, Styrol-Polymerisate und Copolymerisate, so z. B. die Styrolacrylnitril-Copolymerisate, Styrol(meth)acrylsäure- bzw. ester-Copolymerisate, Acrylnitrilbutadien-Copolymerisate, Acrylnitril(meth) acrylat-Copolymerisate, Poly(meth)acrylate, Celluloseester wie Celluloseacetat, Celluloseacetobutyrat, Celluloseacetopropionat, Cellulosepropionat, Äthylcellulose, Polyamide, bevorzugt auf Basis von Caprolactam, Laurinlactam, Aminoundecansäure, Hexamethylendiamin und Acrylsäure, aromatische Polycarbonate, aromatische Polyester wie Polyäthylenterephthalat und Polybutylenterephthalat, Silicone.

Die erfindungsgemäße Aluminiumfolie ist durch ihre hohe Plastizität gekennzeichnet. Charakteristisch ist ihr Dehnungsverhalten im Zugversuch. Gute Tiefzieheigenschaften der erfindungsgemäßen Laminate erhält man dann, wenn die Dehnung $> 30$ % bei einer Dehngeschwindigkeit $> 10^1$/sec nach DIN 53 455 beträgt.

Materialien der genannten Art erhält man aus Aluminium durch Dotierung mit Metallen, die eine Gitterstörung des Aluminiumgefüges verursachen. Ein typisches Material ist das Supral der Superform Ltd., Worcester, England. Produkte der genannten Art werden als superplastische Aluminiumlegierungen bezeichnet.

Die Herstellung der erfindungsgemäßen Verbundfolien erfolgt nach bekannten Techniken. Im allgemeinen werden die Kunststoff-Folien durch Gießen oder Extrudieren vorgefertigt und mit der Aluminiumfolie kaschiert.

Die einzelnen Arbeitsgänge können jedoch auch zu einem Vorgang zusammengefaßt werden.

Der Aufbau der Kunststoff-Aluminium-Verbundfolien kann

Le A 18 608

- 4 -

breit variiert werden. Sei es, daß man einen zwei- oder mehrschichtigen Aufbau wählt. Bevorzugt wird ein dreischichtiger Aufbau, bei dem eine Aluminiumfolie von 2 Kunststoffschichten umgeben ist. Ein großer Freiheitsgrad beruht in der Wahl der Kunststoff-Folienschichten. Die Auswahl wird sowohl nach den Gesichtspunkten Standfestigkeit, Chemikalienbeständigkeit, toxikologische Unbedenklichkeit als auch nach ökonomischen Gesichtspunkten, wie Preis, Verarbeitungsverhalten und Design, erfolgen.

Nach diesen Kriterien richtet sich auch die Schichtdicke der einzelnen Laminat-Elemente. Geeignet sind Schichtdicken von 0,1 bis zu 5 mm bei der tragenden Kunststoffschicht. Die Deckschichten, die meist die Aufgabe der erhöhten Kratzfestigkeit, der Chemikalienbeständigkeit, der Bedruckbarkeit zu erfüllen haben, sind von wesentlich geringerer Stärke und im allgemeinen 1 bis 20 $\mu$m dick. Ähnliche Schichtstärken werden für die Aluminiumfolie verwendet.

Je dünner die Aluminiumfolie ist, umso günstiger ist ihr Verformungsverhalten; jedoch besteht dann die Gefahr der Rißbildung. Für die endgültige Wahl der Schichtstärke sind die Bedingungen des Tiefziehverhaltens ausschlaggebend. So kann es z. B. erforderlich sein, um gute Hafteigenschaften zu erzielen, die einzelnen Folien, sei es, daß man vorextrudierte Materialien einsetzt oder die Direktextrusion oder Begießung wählt, in ihrer Oberfläche zu modifizieren. Geeignete Verfahren hierzu sind: Anoxydation - besonders bei der Aluminiumfolie - oder die Behandlung im elektrischen Hochfrequenzfeld, wie z.B. bei der Korona-Entladung.

Le A 18 608

- 5 -

Die so hergestellten erfindungsgemäßen Verbundfolien werden in erster Linie als Basismaterialien für die Tiefziehtechnik verwendet. Auf die einzelnen Verfahrensvarianten kann der Fachmann je nach Anwendungstechnik zurückgreifen. Selbstverständlich erfolgt die Auswahl hier nach den verarbeitungstechnischen Gegebenheiten der Laminate.

Kurze Verarbeitungszyklen erfordern mitunter die Auswahl weniger ausgeprägter Ziehkanten und eine Beschränkung auf nur ca. 50 % der durch die einzelnen Komponenten vorgegebenen max. Tiefziehfähigkeit.

Typische Einsatzgebiete der tiefgezogenen Formteile liegen im Verpackungsbereich, besonders auf dem Sektor der Lebensmittelverpackung, wo ein gasdichter Abschluß oder Verschluß (Aromaschutz, Zutritt von Sauerstoff, Verhinderung einer Diffusion) die Lebensdauer hochwertiger Verpackungsgüter beschränkt. Das sind nahezu alle Lebensmittel des täglichen Bedarfs.

Le A 18 608

Patentansprüche

1. Gasdichte Kunststoff-Aluminium-Verbundfolien, dadurch gekennzeichnet, daß zu ihrer Herstellung Aluminiumfolien verwendet werden mit einer Reißdehnung von $>30$ % bei einer Dehngeschwindigkeit von $>10^1$ %/sec.

2. Kunststoff-Aluminium-Verbundfolien nach Anspruch 1 aus einer Aluminium- und einer Kunststoffschicht.

3. Kunststoff-Aluminium-Verbundfolien nach Anspruch 1 aus mehreren Aluminium- und mehreren Kunststoffschichten.

4. Kunststoff-Aluminium-Verbundfolien nach Ansprüchen 1 bis 3, erhalten durch Kaschieren der Aluminium- und der Kunststoff-Folien.

5. Kunststoff-Aluminium-Verbundfolien nach Ansprüchen 1 bis 4, in denen die Kunststoff-Folie 0,1 bis 4 mm dick ist.

6. Kunststoff-Aluminium-Verbundfolien nach Ansprüchen 1 bis 4, in denen die Aluminiumfolie 1 bis 20 $\mu$m dick ist.

7. Kunststoff-Aluminium-Verbundfolien nach Ansprüchen 1 bis 4, deren Kunststoff-Folien aus Polyäthylen oder Polypropylen bestehen.

8. Verwendung der Kunststoff-Aluminium-Verbundfolien gemäß Anspruch 1 zur Herstellung von Formteilen nach dem Tiefziehverfahren.

9. Verwendung der Kunststoff-Aluminium-Verbundfolien gemäß Anspruch 1 als Verpackungsmaterial für Lebensmittel.

Le A 18 608

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 550 778</u> (ST. JOE MINERALS) <br><br> * Patentansprüche 1,2,10,11; Seite 7, Absatz 1 - Seite 22, Absatz 2 * <br><br> -- | 1-9 |
| A | <u>CH - A - 423 559</u> (SCHWEIZ. ALU-MINIUM) <br><br> -- | 1,2,4, 7-9 |
| A | <u>DE - A - 2 614 660</u> (ALCAN FOLIEN) <br><br> -- | 1,2,4, 7-9 |
| A | <u>DE - A - 2 521 330</u> (THE BRITISH ALUMINIUM) <br><br> ---- | 1 |

**KLASSIFIKATION DER ANMELDUNG (Int.Cl.²)**

B 32 B 15/08
B 65 D 65/40

**RECHERCHIERTE SACHGEBIETE (Int. Cl.²)**

B 32 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-03-1979 | BLASBAND |

EPA form 1503.1   06.78